# EUROPEAN PATENT SPECIFICATION

(11) **EP 2 868 872 B1**
(45) Date of publication and mention of the grant of the patent: **05.09.2018**
(21) Application number: 13190995.4
(22) Date of filing: 31.10.2013
(51) Int. Cl.: F01K 23/10, F22D 1/32, F22D 3/00, F22D 3/06

(54) **Feedwater preheating system and method**
Speisewasservorwärmungssystem und -verfahren
Système et procédé de préchauffage d'eau d'alimentation

(43) Date of publication of application: 06.05.2015
(73) Proprietor: General Electric Technology GmbH, 5400 Baden (CH)
(72) Inventor: Drouvot, Paul, 68128 Village-Neuf (FR); Stenstroem, Torbjoern, 5400 Baden (CH); Dietzmann, Joerg, 5400 Baden (CH); Droux, François, 5452 Oberrohrdorf (CH)
(74) Representative: General Electric Technology GmbH

(56) References cited:
- EP-A1- 2 351 914
- US-A- 3 756 023
- US-A- 4 290 390
- US-A- 4 516 403
- US-A- 4 552 099
- US-A- 4 896 500
- US-A1- 2013 227 957

## Description

### BACKGROUND

### Field of Endeavor

The present disclosure relates to Combined Cycle Power Plants (CCPP), and, more particularly, to feedwater preheating system and method for preheating feedwater to be fed into a Heat Recovery Steam Generator (HRSG) in the CCPP.

### Brief Description of the Related Art

Where equipped, in Combined Cycle Power Plants (CCPP), feedwater heating systems are generally used to preheat water delivered Heat Recovery Steam Generators (HRSG) to up to or above a fixed minimum temperature required at the HRSG.

An example may be found in US 4552099 A, where boiler feedpump net positive suction head (NPSH) control is performed in a heat recovery steam generator including a deaerator inserted between steam turbine condensate and steam boiler. To this effect apparatus is provided responsive to temperature at the output of the deaerator, to fluid flow therefrom, and to temperature at the input of the boiler feedpump for providing a signal representative of the anticipated suction head pressure, and the NPSH margin is derived by comparison with actual pressure to control the pegging valve, or other heat source control to the deaerator.

Another example may be found in US 2013/227957 A1, relates to a method for operation of a combined-cycle power plant with cogeneration, in which method combustion air is inducted in at least one gas turbine, is compressed and is supplied to at least one combustion chamber for combustion of a fuel, and the resultant exhaust gas is expanded in at least one turbine, producing work, and in which method the exhaust gas emerging from the at least one turbine is passed through a heat recovery steam generator in order to generate steam, which generator is part of a water-steam circuit with at least one steam turbine, a condenser, a feedwater tank and a feedwater pump, wherein heat is provided by extracting steam from the at least one steam turbine, wherein the electricity production is decoupled from the steam production in that in order to restrict the electricity production while the heat provided by means of steam extraction remains at a constant level, a portion of the inducted combustion air is passed through the at least one turbine to the heat recovery steam generator without being involved in the combustion of the fuel in the gas turbine, and in that this portion of the combustion air is used to operate at least one supplementary firing in the heat recovery steam generator

Yet another example may be found in US 3756023 A, where a system is described for preventing the formation of steam in an economizer coil disposed within a heat recovery steam generator used in a combined gas turbine and steam turbine power plant. This is accomplished by recycling a portion of the water at the output of the economizer back into the condensate conduit feeding the steam generator such that a constant water flow will be maintained through the economizer under all operating conditions, preventing a more or less stagnant water condition in the economizer and insuring against the formation of steam therein. The recirculated water, prior to entering the condensate conduit, is preferably passed through a heat exchanger where the heat of the water from the economizer is transferred to the incoming condensate to prevent flashing as the water from the economizer enters the condensate conduit through a valve.

Preheating the feedwater reduces the irreversibilities involved in steam generation in the HRSG and improves the thermodynamic efficiency of the CCPP. Among various others advantages of the preheating feedwater, such preheating also helps avoiding corrosion caused by flue gas condensation on outer tubes surface in inside the HRSG.

For the CCPP equipped with the feedwater heating systems, the preheating is achieved by different heating source, such as, pegging steam extracted from the HRSG, steam turbine extraction either in a condensate preheater, a separate feedwater preheater, feedwater recirculation from an economizer extraction or recirculation of feedwater in a dedicated HRSG coil at a cold end of the HRSG. A philosophy of the mentioned state of the art concepts is to control a fixed temperature, generally, in the feedwater tank.

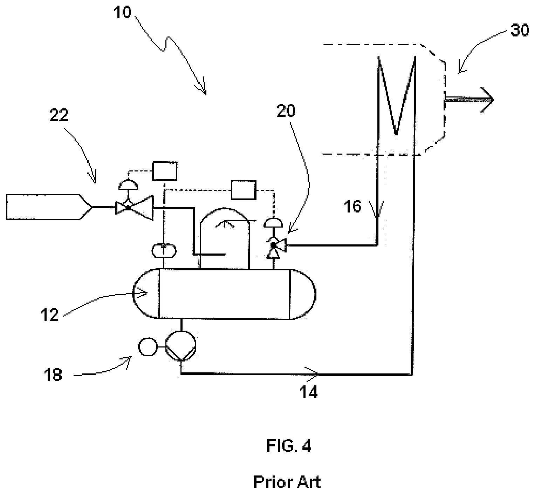

A prior art FIG. 4 depicts a typical outline of the feedwater preheating system 10 utilized for preheating and controlling the fixed temperature of the feedwater. The system 10 includes a feedwater tank 12 having a feed line 14 and a return line 16 to feed the preheated water to the HRSG, such as, a HRSG 30. The feed line 14 includes a pump 18 to convey the feedwater to the HRSG 30, and the return line 16 may include a control valve 20 to throttle the flow of the feedwater. The control valve 20 throttles the flow to adjust the recirculation mass flow and therefore adjust the heat input to the feedwater tanks to maintain required temperature. Alternatively, the feedwater flow is controlled by using the pump 18, where the feedwater recirculation mass flow is variable. Nevertheless, for certain load cases of the CCPP, the heat integrated by the feedwater recirculation system operating at full load (e.g. 130kg/s) may not be enough to maintain the required minimum temperature set point, which may usually be 60°C or above. For that, as depicted in FIG. 4, the system 10 includes the heating source, such as a pegging steam circuit 22, to supply heated steam to maintain and control the minimum feedwater temperature set point in the feedwater tank 12.

Using any such heating source may constantly affects the CCPP efficiency since the energy used to heat the feedwater is usually derived from a main steam source (CRH, LP, etc.) or extracted between the stages of the steam turbine. Therefore, the steam that would be used to perform expansion work in the turbine (and therefore generate power) is not utilized for that purpose. The percentage of the total cycle steam mass flow used for the feedwater heating must be carefully optimized for maximum CCPP efficiency since increasing in fraction of this steam causes a decrease in the CCPP efficiency.

Accordingly, there exists a need to minimize or preclude the need of utilizing such heating stream to heat the feedwater for heating HRSG to maximize efficiency of the CCPP.

### SUMMARY

The present disclosure describes improved feedwater preheating system and method, that will be presented in the following simplified summary to provide a basic understanding of one or more aspects of the disclosure that are intended to overcome the discussed drawbacks, but to include all advantages thereof, along with providing some additional advantages. This summary is not an extensive overview of the disclosure. It is intended to neither identify key or critical elements of the disclosure, nor to delineate the scope of the present disclosure. Rather, the sole purpose of this summary is to present some concepts of the disclosure, its aspects and advantages in a simplified form as a prelude to the more detailed description that is presented hereinafter.

An object of the present disclosure is to describe improved feedwater preheating systems and methods, which may minimize or preclude the need of utilizing high energetics heating stream to heat the feedwater to maximize efficiency of a Combined Cycle Power Plants (CCPP). Such improved feedwater preheating systems and methods may equally be capable in preventing corrosion caused by flue gas condensation on outer tubes surface in inside the HRSG. Further, object of the present disclosure is to describe an improved feedwater preheating systems and methods, which may be convenient to use in an effective and economical way. Various other objects and features of the present disclosure will be apparent from the following detailed description and claims.

The above noted and other objects, in one aspect, may be achieved by an improved feedwater preheating system. The feedwater preheating system is adapted to preheat feedwater to be fed into a Heat Recovery Steam Generator (HRSG). The feedwater preheating system includes a feedwater tank and a constant volume recirculation pump. The feedwater tank is adapted to store the feedwater. The feedwater tank includes a feed line and a return line. The feed line is adapted to feed the feedwater to the HRSG, and the return line adapted to enable returning of the feedwater into the feedwater tank. The return line precludes a control valve to reduce component loss while feedwater recirculation. Further, the constant volume recirculation pump is configured in the feed line to recirculate the feedwater between the HRSG and the feedwater tank. The constant volume recirculation pump recirculate the feedwater at constant speed and volume to reduce heat loss while feedwater recirculation, thereby increasing efficiency of the HRSG.

In one embodiment of the present disclosure, the feedwater is maintained above or at a minimum set temperature, defined during the design based on the sulphur / water content in the flue gas. In such embodiment, preclusion of the control valve from the return line and inclusion of the constant volume recirculation pump, instead of variable volume recirculation pump, enable the feedwater preheating system to recirculate the feedwater at constant speed and volume, reducing heat loss while feedwater recirculation, and maintaining the minimum set temperature of the feedwater, as set during designing.

In further embodiment of the present disclosure, instead of defining the minimum set temperature during the design, as in the above embodiment, the feedwater is maintained at a temperature, a required minimum or above set temperature, as required by the HRSG during operation. As per this embodiment, a Continuous Emission Monitoring System (CEMS) circuit or any other measuring device, such as dedicated water/ acid dew point measurement device, is configured to the HRSG to enable calculation of the required minimum set temperature, based on parameters of the HRSG, at which the feedwater is required to be kept for recirculation in the HRSG. In this embodiment, preclusion of the control valve from the return line and inclusion of the constant volume recirculation pump, to recirculate the feedwater at constant speed and volume, reduce heat loss while feedwater recirculation, and maintain the required minimum set temperature of the feedwater, as calculated by the CEMS circuit.

In both the embodiments, the feedwater preheating system includes an optional provision of a pegging steam line source to supply pegging steam to the feedwater tank to preheat the feedwater up to the minimum temperature set during the designing or up to the required minimum set temperature calculated by the CEMS circuit. As and when the temperature of the feedwater in the feedwater tank reaches below the minimum set temperature or below the required calculated minimum set temperature, the pegging steam line source may be activated to attain the feedwater temperature requirement. Such control and reduced use of the pegging steam is capable of increasing efficiency of the HRSG and hence of the CCSS.

Both embodiments of the feedwater preheating system includes a control valve configured in the pegging steam source line to close and open the pegging steam source line to supply the pegging steam. Both the embodiments of the system also further includes a temperature control circuit configured to the control valve of the pegging steam source line and to the feedwater tank, to send signals to open and close the control valve based on the temperature of the feedwater tank in order to maintain the minimum set temperature of the feedwater.

In further aspect of the present disclosure, instead of minimizing the pegging steam for preheating the feedwater, it is complete precluded from the feedwater preheating system. In this aspect, the feedwater preheating system includes a feedwater tank, a constant volume recirculation pump and a pressure control means. The feedwater tank includes a feed line and a return line. The feed line is configured to feed the feedwater to the HRSG; and the return line is configured to enable returning of the feedwater into the feedwater tank. The return line precludes the control valve and is configured to the feedwater tank. Further, the constant volume recirculation pump is configured in the feed line to recirculate the feedwater between the HRSG and the feedwater tank. The constant volume recirculation pump is configured to recirculate the feedwater at constant speed and volume to reduce heat loss while feedwater recirculation. Furthermore, the pressure control means is configured to an evaporator of the HRSG to increase an operational pressure of steam in the evaporator to shift heat to the feed line to increase heat gain in the feedwater and maintain a minimum set temperature of the feedwater, thereby precluding the pegging steam requirement for preheating the feedwater as and when required in the above two embodiments, thereby increasing the efficiency of the HRSG.

The feedwater preheating system may further includes a temperature control circuit configured to the pressure control means of the evaporator and to the feedwater tank, to send signals to increase or decrease the operational pressure of the steam in the evaporator based on the temperature of the feedwater tank in order to maintain the minimum set temperature of the feedwater.

In further aspect, methods are disclosed in the present disclosure to be operable in view of the respective feedwater preheating systems.

Such improved feedwater preheating systems, either minimize or preclude the need of utilizing heating stream to heat the feedwater for heating a Heat Recovery Steam Generator (HRSG) to maximize efficiency of a Combined Cycle Power Plants (CCPP). Such improved feedwater preheating systems and methods may equally be capable in preventing corrosion caused by flue gas condensation on outer tubes surface in inside the HRSG. Further, the improved feedwater preheating systems may be convenient to use in an effective and economical way.

These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will be better understood with reference to the following detailed description and claims taken in conjunction with the accompanying drawing, wherein like elements are identified with like symbols, and in which:
FIG. 1 illustrates an example line diagram of a feedwater preheating system, in accordance with first exemplary embodiment of the present disclosure; and
FIG. 2 illustrates an example line diagram of a feedwater preheating system, in accordance with second exemplary embodiment of the present disclosure;
FIG. 3 illustrates an example line diagram of a feedwater preheating system, in accordance with third exemplary embodiment of the present disclosure; and
FIG. 4 illustrates an example line diagram of a feedwater preheating system as per prior art.

Like reference numerals refer to like parts throughout the description of several views of the drawings.

### DETAILED DESCRIPTION OF THE PRESENT DISCLOSURE

For a thorough understanding of the present disclosure, reference is to be made to the following detailed description, including the appended claims, in connection with the above described drawings. In the following description, for purposes of explanation, numerous specific details are set forth in order to provide a thorough understanding of the present disclosure. It will be apparent, however, to one skilled in the art that the present disclosure can be practiced without these specific details. In other instances, structures and apparatuses are shown in block diagrams form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

Although the following description contains many specifics for the purposes of illustration, anyone skilled in the art will appreciate that many variations and/or alterations to these details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure. The terms "a" and "an" herein do not denote a limitation of quantity, but rather denote the presence of at least one of the referenced item.

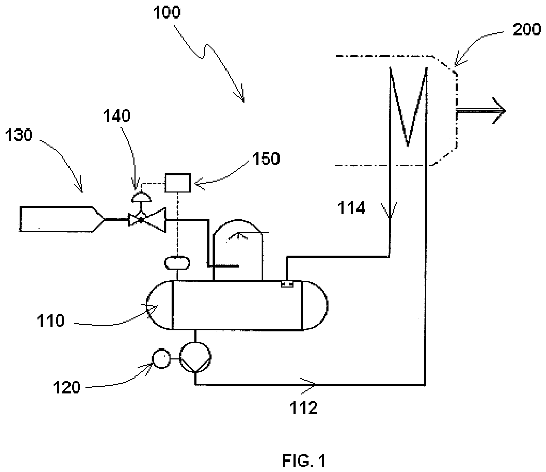

Referring now to FIGS. 1 to 3, various examples of feedwater preheating systems illustrated in accordance with various exemplary embodiments of the present disclosure. In as much as the construction and arrangement of the feedwater preheating systems and its arrangement with respect a Heat Recovery Steam Generator (HRSG) 200 to maximize efficiency of a Combined Cycle Power Plants (CCPP), various associated elements may be well-known to those skilled in the art, it is not deemed necessary for purposes of acquiring an understanding of the present disclosure that there be recited herein all of the constructional details and explanation thereof. Rather, it is deemed sufficient to simply note that as shown in FIGS. 1 to 3, the feedwater preheating systems 100, only those components are shown that are relevant for the description of various embodiments of the present disclosure.

As shown in FIG. 1, according to first aspect the present disclosure, the feedwater preheating system 100 includes a feedwater tank 110 and a constant volume recirculation pump 120. The feedwater tank 110 is adapted to store the feedwater. The feedwater tank 110 includes a feed line 112 and a return line 114. The feed line 112 is adapted to feed the feedwater to the HRSG 200. Further the return line 114 is adapted to enable returning of the feedwater into the feedwater tank 110. As compared to the prior art feedwater preheating system 10, shown in FIG. 4, the return line 114 of the present embodiment precludes a control valve 20, and that the return line 114 is directly configured to the feedwater tank 110 to reduce component loss while feedwater recirculation. Further, the constant volume recirculation pump 120 is configured in the feed line 112 to recirculate the feedwater between the HRSG 200 and the feedwater tank 110. The constant volume recirculation pump 120 is fully redundant to recirculate the feedwater at constant speed and volume to reduce heat loss while feedwater recirculation, as against the prior art feedwater preheating system 10 that recirculate feedwater with variable speed and volume.

In one embodiment of the present disclosure as shown in FIG. 1, the feedwater is maintained at minimum or above a set temperature, defined during the design based on the sulphur / water content in the flue gas of the CCPP. In this embodiment, preclusion of the control valve 10 (as shown in prior art FIG. 4) from the return line 114 and inclusion of the constant volume recirculation pump 120 instead of the variable speed and volume pumps 18 (as shown in prior art FIG. 4), make the feedwater preheating system 100 fully redundant to recirculate the feedwater at constant speed and volume, reduces heat loss while feedwater recirculation and maintain the minimum set temperature of the feedwater, as set during designing.

In further embodiment of the present aspect as shown in FIG. 1, the feedwater preheating system 100 may further include an optional provision of a pegging steam line source 130 to supply a pegging steam in the feedwater tank 110 to reheat the feedwater to up to the minimum set temperature set during the designing. As and when the temperature of the feedwater in the feedwater tank 110 reaches below the minimum set temperature, the pegging steam line source 130 may be activated to attain the feedwater temperature requirement. Such control and reduced use of the pegging steam is capable of increasing efficiency of the HRSG and hence of the CCSS.

In further embodiment, the feedwater preheating system 100, as shown in FIG. 1, includes a control valve 140 configured in the pegging steam source line 130 to close and open the pegging steam source line 130 to supply the pegging steam as and when required. Further, the system 100 also includes a temperature control circuit 150 configured to the control valve 140 of the pegging steam source line 130 and to the feedwater tank 110, to send signals to open and close the control valve 140 based on the temperature of the feedwater tank 110 in order to maintain the minimum set temperature of the feedwater.

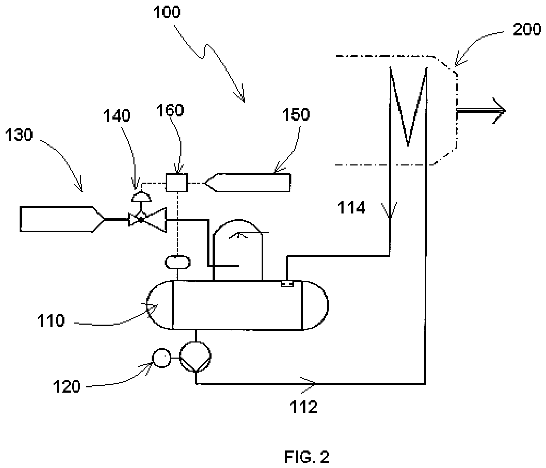

Referring now to FIG. 2, a second aspect of the present disclosure, where instead of defining the minimum set temperature during the design, as in the first aspect described with respect to FIG. 1, the feedwater is maintained at or above a required temperature, herein after referred as "required minimum temperature," as required by the HRSG 200 during the operation. As per this aspect, shown in FIG. 2, a Continuous Emission Monitoring System (CEMS) circuit 160 is configured to the HRSG 200 to calculate the required minimum temperature for the feedwater, based on parameters of the HRSG 200. , at which the feedwater is required to be kept for recirculation in the HRSG 200 to avoid corrosion thereof. However, without departing from the scope of the present disclosure, apart from the CEMS, any other measuring device, such as dedicated water/ acid dew point measurement device may also be used to for calculation of the required minimum temperature. Further, in this second aspect (as shown in FIG. 2), similar to the first aspect (as per FIG. 1), preclusion of the control valve 10 from the return line 114 and the constant volume recirculation pump 120, makes the feedwater preheating system 100 fully redundant to recirculate the feedwater at constant speed and volume, reduce heat loss while feedwater recirculation, and maintain the required minimum temperature of the feedwater, as calculated by the CEMS circuit 160.

Similar to the first aspect (shown in FIG. 1), the second aspect (shown in FIG. 2) of the feedwater preheating system 100 also includes the optional provision of the pegging steam line source 130 to supply the pegging steam in the feedwater tank 110 to reheat the feedwater to up to the required minimum temperature calculated by the CEMS circuit 160. As and when the temperature of the feedwater in the feedwater tank 110 reaches below the required calculated minimum temperature, the pegging steam line source 130 may be activated to attain the feedwater temperature requirement. Such control and reduced use of the pegging steam is capable of increasing efficiency of the HRSG 200 and in turn the efficiency of the CCSS.

Similar to first aspect as shown in FIG. 1, the feedwater preheating system 100 of the second aspect (shown in FIG. 2), also includes the control valve 140 configured in the pegging steam source line 130 to close and open the pegging steam source line 130 to supply the pegging steam as and when required. Further, the system 100 of second aspect also includes the temperature control circuit 150 configured to the control valve 140 of the pegging steam source line 130 and to the feedwater tank 110, to send signals to open and close the control valve 140 based on the temperature of the feedwater tank 110 in order maintain the required minimum temperature of the feedwater calculated by the CEMS circuit 160.

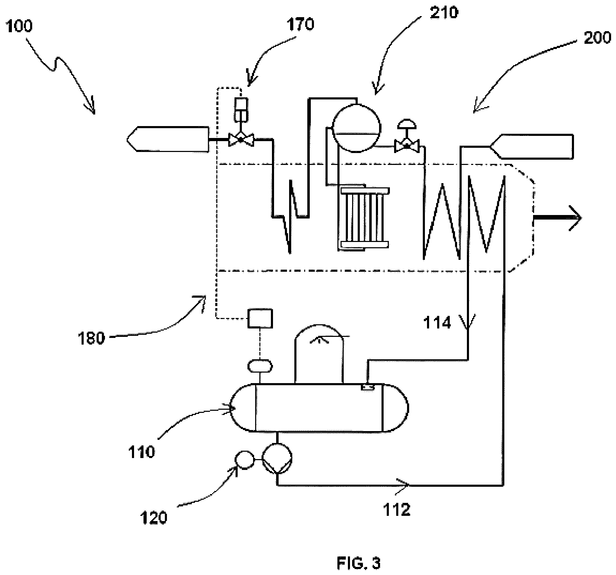

Referring now to FIG. 3, third aspect of the feedwater preheating system 100 is depicted. As per this aspect, the feedwater preheating system 100, instead of minimizing the pegging steam for preheating the feedwater which may optionally be required in the feedwater preheating system 100 of the first and second aspects, such use of the pegging steam is completely precluded. In this aspect, the feedwater preheating system 100 includes a feedwater tank 110, a constant volume recirculation pump 120 and a pressure control means 170. The feedwater tank 110 includes a feed line 112 and a return line 114, as similar to the first and second aspects of the feedwater preheating system 100, and excluded herein from explanation for the sake of brevity. Further, the constant volume recirculation pump 130 of the third aspect is similar to the first and second aspects of the feedwater preheating system 100, and excluded herein from explanation for the sake of brevity. The third aspect of the feedwater preheating system 100 includes the pressure control means 170, which is configured at a steam turbine inlet, specifically to an evaporator 210 of the HRSG 200, to increase an operational pressure of steam in the evaporator 210 to shift heat to the feed line 112 to increase heat gain in the feedwater and maintain the minimum set temperature of the feedwater. Since the heat required for preheating the feedwater to up to the minimum set temperature is gained by the evaporator 210 by shifting its heat to the feed line 112, the pegging steam requirement for preheating the feedwater as and when required in the above two aspects is excluded in the third aspect of the present disclosure, thereby increasing the efficiency of the HRSG 200.

The feedwater preheating system 100 as shown in FIG. 3 may include a temperature control circuit 180 configured to the pressure control means 170 of the evaporator 210 and to the feedwater tank 110, to send signals to increase or decrease the operational pressure of the steam in the evaporator 210 based on the temperature of the feedwater tank 110 in order to maintain the minimum set temperature of the feedwater.

The invention of the present disclosure is advantageous in various scopes. Such improved feedwater preheating systems, either minimize or preclude the need of utilizing heating stream to heat the feedwater for heating a Heat Recovery Steam Generator (HRSG) to maximize efficiency of a Combined Cycle Power Plants (CCPP). Such improved feedwater preheating systems and methods may equally be capable in preventing corrosion caused by flue gas condensation on outer tubes surface in inside the HRSG. Further, the improved feedwater preheating systems may be convenient to use in an effective and economical way. Various other advantages and features of the present disclosure are apparent from the above detailed description and appendage claims.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated. It is understood that various omission and substitutions of equivalents are contemplated as circumstance may suggest or render expedient, but such are intended to cover the application or implementation without departing from the spirit or scope of the claims of the present disclosure.

### Reference Numeral List

- 100: feedwater preheating system
- 110: Feedwater tank
- 112: Feed line
- 114: Return line
- 120: Constant volume recirculation pump
- 130: Pegging steam source line
- 140: Control valve
- 150: Temperature control circuit
- 160: Continuous Emission Monitoring System (CEMS) circuit
- 170: Pressure control means
- 180: Temperature control circuit
- 200: Heat Recovery Steam Generator (HRSG)
- 210: Evaporator

### Prior Art Numerals:

- 10: Feedwater preheating system
- 12: Feedwater tank
- 14: Feed line
- 16: Return line
- 18: Variable speed pump
- 20: Control valve
- 22: Pegging steam circuit
- 30: HRSG

## Claims

1. A feedwater preheating system (100) for preheating feedwater to be fed into a Heat Recovery Steam Generator (HRSG) (200), the feedwater preheating system 100, comprising:
a Heat Recovery Steam Generator (200), a feedwater tank (110) to store the feedwater, the feedwater tank having a feed line (112) to feed the feedwater to the Heat Recovery Steam Generator (200), and a return line (114) to enable returning of the feedwater into the feedwater tank (110), wherein the return line (114) precludes a control valve and is configured to the feedwater tank (110) to reduce component loss while feedwater recirculation;
**characterized in that** a constant volume recirculation pump (120) is configured in the feed line (112) to recirculate the feedwater between the Heat Recovery Steam Generator (200) and the feedwater tank (110), wherein the constant volume recirculation pump (120) is capable of recirculating the feedwater at constant speed and volume to reduce heat loss while feedwater recirculation, thereby increasing efficiency of the Heat Recovery Steam Generator (200).

2. The feedwater preheating system (100) as claimed in claim 1, **characterized in** comprising a pegging steam source line (130) configured to the feedwater tank (110) to supply pegging steam to preheat the feedwater as and when the temperature of the feedwater in the feedwater tank (110) reaches below a minimum set temperature.

3. The feedwater preheating system (100) as claimed in claim 2, **characterized in** comprising a control valve (140) configured in the pegging steam source line (130) to close and open the pegging steam source line (130) to supply the pegging steam.

4. The feedwater preheating system (100) as claimed in claim 3, **characterized in** comprising a temperature control circuit (150) configured to the control valve (140) of the pegging steam source line (130) and to the feedwater tank (110), to send signals to open and close the control valve (140) based on the temperature of the feedwater tank (110) in order to maintain the minimum set temperature of the feedwater.

5. The feedwater preheating system (100) as claimed in claim 1, **characterized in** comprising: a pressure control means (170) configured to a steam turbine inlet at an evaporator (210) of the Heat Recovery Steam Generator (200) to increase an operational pressure of steam in the evaporator (210) to shift heat to the feed line (112) to increase heat gain in the feedwater and maintain a minimum set temperature of the feedwater, thereby increasing the efficiency of the Heat Recovery Steam Generator (200).

6. The feedwater preheating system (100) as claimed in claim 5, further comprising a temperature control circuit (180) configured to the pressure control means (170) of the evaporator (210) and to the feedwater tank (110), to send signals to increase or decrease the operational pressure of the steam in the evaporator (210) based on the temperature of the feedwater tank (110) in order to maintain the minimum set temperature of the feedwater.

7. The feedwater preheating system (100) as claimed in any of claims 2 through 4 **characterized in that** the minimum set temperature is a required minimum temperature as required by the Heat Recovery Steam Generator.

8. The feedwater preheating system (100) as claimed in claim 7 **characterized in** comprising a Continuous Emission Monitoring System (CEMS) circuit (160) configured to the Heat Recovery Steam Generator (200) to enable calculation of the required minimum temperature, based on parameters of the Heat Recovery Steam Generator (200), at which the feedwater is required to be kept for recirculation in the Heat Recovery Steam Generator (200), to enable the pegging steam source line (130) to supply the pegging steam in the feedwater tank (110) to reheat the feedwater to the required minimum temperature calculated by the Continuous Emission Monitoring System circuit (160).

9. The feedwater preheating system as claimed in claim 7, **characterized in** comprising a dedicated water/acid dew point measurement system which is configured to the Heat Recovery Steam Generator (200) to enable calculation of the minimum set temperature based on parameters of the Heat Recovery Steam Generator.

10. A method for preheating feedwater to be fed into a Heat Recovery Steam Generator (200), the method comprising:
circulating the feedwater in a feed line (112) and a return line (114) of a feedwater tank (110), wherein the return line (114) precludes a control valve and is configured to the feedwater tank (110) to reduce component loss while feedwater recirculation, **characterized in**
circulating the feedwater at constant speed and volume to reduce heat loss while feedwater recirculation to maintain a minimum set temperature of the feedwater, thereby increasing the efficiency of the Heat Recovery Steam Generator (200).

11. The method as claimed in claim 10, **characterized in** comprising supplying pegging steam to preheat the feedwater as and when the temperature of the feedwater reaches below the minimum set temperature.

12. The method as claimed in claim 11, **characterized in** comprising:
calculating a required set temperature of the Heat Recovery Steam Generator (200) at a last stage; and
supplying the pegging steam to preheat the feedwater in the feedwater tank (110) as and when the temperature of the feedwater reaches below the required minimum temperature.

13. The method as claimed in claim 10, **characterized in** comprising:
increasing an operational pressure of steam in an evaporator (210) of the Heat Recovery Steam Generator (200) to shift heat to the feed line (112) to increase heat gain in the feedwater and maintain the minimum set temperature of the feedwater, thereby increasing the efficiency of the Heat Recovery Steam Generator.

14. The method as claimed in any of claims 12 or 13, **characterized in** comprising applying a measurement device configured to the Heat Recovery Steam Generator to enable calculation of the required set temperature based on parameters of the Heat Recovery Steam Generator:

15. The method as claimed in the preceding claim, **characterized in that** the measurement device is one of a Continuous Emission Monitoring System and a dedicated water/acid dew point measurement device.

## Patentansprüche

1. Speisewasservorwärmungssystem (100) zum Vorwärmen von Speisewasser, das in einen Wärmerückgewinnungsdampfgenerator (HRSG) (200) eingespeist werden soll, wobei das Speisewasservorwärmungssystem (100) umfasst:
einen Wärmerückgewinnungsdampfgenerator (200),
einen Speisewassertank (110) zum Aufbewahren des Speisewassers, wobei der Speisewassertank eine Speiseleitung (112) zum Speisen des Speisewassers in den Wärmerückgewinnungsdampfgenerator (200) und eine Rücklaufleitung (114) aufweist, um Rücklauf des Speisewassers in den Speisewassertank (110) zu ermöglichen, wobei die Rücklaufleitung (114) ein Steuerventil ausschließt und an dem Speisewassertank (110) eingerichtet ist, um Komponentenverlust während des Speisewasserumwälzens zu reduzieren,
**dadurch gekennzeichnet, dass** eine Konstantvolumenumwälzpumpe (120) in der Speiseleitung (112) eingerichtet ist, um das Speisewasser zwischen dem Wärmerückgewinnungsdampfgenerator (200) und dem Speisewassertank (110) umzuwälzen, wobei die Konstantvolumenumwälzpumpe (120) in der Lage ist,
das Speisewasser mit konstanter Geschwindigkeit und konstantem Volumen umzuwälzen, um den Wärmeverlust während der Speisewasserumwälzung zu reduzieren, wodurch die Effizienz des Wärmerückgewinnungsdampfgenerators (200) erhöht wird.

2. Speisewasservorwärmungssystem (100) nach Anspruch 1, **dadurch gekennzeichnet, dass** es eine Stützdampfquellleitung (130) umfasst, die an dem Speisewassertank (110) eingerichtet ist, um Stützdampf zuzuführen, um das Speisewasser vorzuwärmen, falls und wenn die Temperatur des Speisewassers in dem Speisewassertank (110) unter eine Mindestsolltemperatur fällt.

3. Speisewasservorwärmungssystem (100) nach Anspruch 2, **dadurch gekennzeichnet, dass** es ein Steuerventil (140) umfasst, das in der Stützdampfquellleitung (130) eingerichtet ist, um die Stützdampfquellleitung (130) zu schließen und zu öffnen, um den Stützdampf zuzuführen.

4. Speisewasservorwärmungssystem (100) nach Anspruch 3, **dadurch gekennzeichnet, dass** es eine Temperatursteuerungsschaltung (150) umfasst, die an dem Steuerventil (140) der Stützdampfquellleitung (130) und dem Speisewassertank (110) eingerichtet ist, um Signale zum Öffnen und Schließen des Steuerventils (140) basierend auf der Temperatur des Speisewassertanks (110) zu senden, um die Mindestsolltemperatur des Speisewassers aufrechtzuerhalten.

5. Speisewasservorwärmungssystem (100) nach Anspruch 1, **dadurch gekennzeichnet, dass** es umfasst: ein Drucksteuerungsmittel (170), das an einem Dampfturbineneinlass an einem Verdampfer (210) des Wärmerückgewinnungsdampfgenerators (200) eingerichtet ist, um einen Betriebsdruck des Dampfes in dem Verdampfer (210) zu erhöhen, um Wärme zu der Speiseleitung (112) zu verlagern, um den Wärmegewinn in dem Speisewasser zu erhöhen und eine Mindestsolltemperatur des Speisewassers aufrechtzuerhalten, wodurch die Effizienz des Wärmerückgewinnungsdampfgenerators (200) erhöht wird.

6. Speisewasservorwärmungssystem (100) nach Anspruch 5, das ferner eine Temperatursteuerungsschaltung (180) umfasst, die an dem Drucksteuerungsmittel (170) des Verdampfers (210) und dem Speisewassertank (110) eingerichtet ist, um Signale zum Erhöhen oder Absenken des Betriebsdruckes des Dampfes in dem Verdampfer (210) basierend auf der Temperatur des Speisewassertanks (110) zu senden, um die Mindestsolltemperatur des Speisewassers aufrechtzuerhalten.

7. Speisewasservorwärmungssystem (100) nach einem der Ansprüche 2 bis 4, **dadurch gekennzeichnet, dass** die Mindestsolltemperatur eine erforderliche Mindesttemperatur ist, die von dem Wärmerückgewinnungsdampfgenerator gefordert wird.

8. Speisewasservorwärmungssystem (100) nach Anspruch 7, **dadurch gekennzeichnet, dass** es eine kontinuierliche Emissionsüberwachungssystem-(CEMS)-Schaltung (160) umfasst, die an dem Wärmerückgewinnungsdampfgenerator (200) eingerichtet ist, um Berechnung der erforderlichen Mindesttemperatur basierend auf Parametern des Wärmerückgewinnungsdampfgenerators (200) zu ermöglichen, auf der das Speisewasser zur Umwälzung in den Wärmerückgewinnungsdampfgenerator (200) gehalten werden muss, um der Stützdampfquellleitung (130) das Zuführen des Stützdampfes in den Speisewassertank (110) zu ermöglichen, um das Speisewasser wieder auf die erforderliche Mindesttemperatur zu erwärmen, die durch die kontinuierliche Emissionsüberwachungssystem-Schaltung (160) berechnet wurde.

9. Speisewasservorwärmungssystem nach Anspruch 7, **dadurch gekennzeichnet, dass** es ein dediziertes Wasser/Säure-Taupunktmesssystem umfasst, das an dem Wärmerückgewinnungsdampfgenerator (200) eingerichtet ist, um Berechnung einer Mindestsolltemperatur basierend auf Parametern des Wärmerückgewinnungsdampfgenerators zu ermöglichen.

10. Verfahren zum Vorwärmen von Speisewasser, das in einen Wärmerückgewinnungsdampfgenerator (200) eingespeist werden soll, wobei das Verfahren umfasst: Umwälzen des Speisewassers in einer Speiseleitung (112) und einer Rücklaufleitung (114) eines Speisewassertanks (110), wobei die Rücklaufleitung (114) ein Steuerventil ausschließt und an dem Speisewassertank (110) eingerichtet ist, um Komponentenverlust während der Speisewasserumwälzung zu reduzieren, **gekennzeichnet durch** Umwälzen des Speisewassers mit konstanter Geschwindigkeit und konstantem Volumen, um Wärmeverlust während der Speisewasserumwälzung zu reduzieren, um eine Mindestsolltemperatur des Speisewassers aufrechtzuerhalten, wodurch die Effizienz des Wärmerückgewinnungsdampfgenerators (200) erhöht wird.

11. Verfahren nach Anspruch 10, **dadurch gekennzeichnet, dass** es Zuführen von Stützdampf umfasst, um das Speisewasser vorzuwärmen, falls und wenn die Temperatur des Speisewassers unter die Mindestsolltemperatur fällt.

12. Verfahren nach Anspruch 11, **dadurch gekennzeichnet, dass** es umfasst:
Berechnen einer erforderlichen Solltemperatur des Wärmerückgewinnungsdampfgenerators (200) in einer letzten Stufe; und
Zuführen des Stützdampfes, um das Speisewasser in dem Speisewassertank (110) vorzuwärmen, falls und wenn die Temperatur des Speisewassers unter die erforderliche Mindesttemperatur fällt.

13. Verfahren nach Anspruch 10, **dadurch gekennzeichnet, dass** es umfasst:
Steigern eines Betriebsdruck des Dampfes in einem Verdampfer (210) des Wärmerückgewinnungsdampfgenerators (200), um Wärme auf die Speiseleitung (112) zu verlagern, um den Wärmegewinn in dem Speisewasser zu erhöhen und die Mindestsolltemperatur des Speisewassers aufrechtzuerhalten, wodurch die Effizienz des Wärmerückgewinnungsdampfgenerators erhöht wird.

14. Verfahren nach einem der Ansprüche 12 oder 13, **dadurch gekennzeichnet, dass** es Anwenden einer Messvorrichtung umfasst, die an dem Wärmerückgewinnungsdampfgenerator eingerichtet ist, um Berechnung der erforderlichen Solltemperatur basierend auf Parametern des Wärmerückgewinnungsdampfgenerators zu ermöglichen.

15. Verfahren nach einem der vorhergehenden Ansprüche, **dadurch gekennzeichnet, dass** die Messvorrichtung eine von einem kontinuierlichen Emissionsüberwachungssystem und einer dedizierten Wasser/Säure-Taupunktmessvorrichtung ist.

## Revendications

1. Système de préchauffage d'eau d'alimentation (100) destiné à préchauffer de l'eau d'alimentation devant alimenter un générateur de vapeur à récupération de chaleur (HRSG) (200), le système de préchauffage d'eau d'alimentation (100), comprenant :
un générateur de vapeur à récupération de chaleur (200), une cuve d'eau d'alimentation (110) pour stocker l'eau d'alimentation, la cuve d'eau d'alimentation ayant une conduite d'alimentation (112) pour alimenter avec l'eau d'alimentation le générateur de vapeur à récupération de chaleur (200), et une conduite de retour (114) pour permettre le retour de l'eau d'alimentation dans la cuve d'eau d'alimentation (110), la conduite de retour (114) excluant une vanne de régulation et étant configurée jusqu'à la cuve d'eau d'alimentation (110) pour réduire la perte de composants pendant la recirculation d'eau d'alimentation ;
**caractérisé en ce qu'**une pompe de recirculation à volume constant (120) est configurée dans la conduite d'alimentation (112) pour faire recirculer l'eau d'alimentation entre le générateur de vapeur à récupération de chaleur (200) et la cuve d'eau d'alimentation (110), la pompe de recirculation à volume constant (120) pouvant faire recirculer l'eau d'alimentation à vitesse et volume constants pour réduire la perte de chaleur pendant la recirculation d'eau d'alimentation, augmentant ainsi l'efficacité du générateur de vapeur à récupération de chaleur (200).

2. Système de préchauffage d'eau d'alimentation (100) selon la revendication 1, **caractérisé en ce qu'**il comprend une conduite source de vapeur d'appoint (130) configurée jusqu'à la cuve d'eau d'alimentation (110) pour fournir de la vapeur d'appoint pour préchauffer l'eau d'alimentation lorsque la température de l'eau d'alimentation dans la cuve d'eau d'alimentation (110) devient inférieure à une température minimale réglée.

3. Système de préchauffage d'eau d'alimentation (100) selon la revendication 2, **caractérisé en ce qu'**il comprend une vanne de régulation (140) configurée dans la conduite source de vapeur d'appoint (130) pour fermer et ouvrir la conduite source de vapeur d'appoint (130) pour fournir la vapeur d'appoint.

4. Système de préchauffage d'eau d'alimentation (100) selon la revendication 3, **caractérisé en ce qu'**il comprend un circuit de régulation de la température (150) configuré jusqu'à la vanne de régulation (140) de la conduite source de vapeur d'appoint (130) et jusqu'à la cuve d'eau d'alimentation (110), pour envoyer des signaux pour ouvrir et fermer la vanne de régulation (140) sur la base de la température de la cuve d'eau d'alimentation (110) afin de maintenir la température minimale réglée de l'eau d'alimentation.

5. Système de préchauffage d'eau d'alimentation (100) selon la revendication 1, **caractérisé en ce qu'**il comprend : un moyen de régulation de la pression (170) configuré jusqu'à une entrée de turbine à vapeur au niveau d'un évaporateur (210) du générateur de vapeur à récupération de chaleur (200) pour augmenter une pression opérationnelle de vapeur dans l'évaporateur (210) pour déplacer la chaleur jusqu'à la conduite d'alimentation (112) pour augmenter le gain de chaleur dans l'eau d'alimentation et maintenir une température minimale réglée de l'eau d'alimentation, augmentant ainsi l'efficacité du générateur de vapeur à récupération de chaleur (200).

6. Système de préchauffage d'eau d'alimentation (100) selon la revendication 5, comprenant en outre un circuit de régulation de la température (180) configuré jusqu'au moyen de régulation de la pression (170) de l'évaporateur (210) et jusqu'à la cuve d'eau d'alimentation (110), pour envoyer des signaux pour augmenter ou diminuer la pression opérationnelle de la vapeur dans l'évaporateur (210) sur la base de la température de la cuve d'eau d'alimentation (110) afin de maintenir la température minimale réglée de l'eau d'alimentation.

7. Système de préchauffage d'eau d'alimentation (100) selon l'une quelconque des revendications 2 à 4 **caractérisé en ce que** la température minimale réglée est une température minimale requise telle que requise par le générateur de vapeur à récupération de chaleur.

8. Système de préchauffage d'eau d'alimentation (100) selon la revendication 7 **caractérisé en ce qu'**il comprend un circuit (160) de système de surveillance continue des émissions (CEMS) configuré jusqu'au générateur de vapeur à récupération de chaleur (200) pour permettre le calcul de la température minimale requise, sur la base de paramètres du générateur de vapeur à récupération de chaleur (200), à laquelle l'eau d'alimentation doit être maintenue pour recirculation dans le générateur de vapeur à récupération de chaleur (200), pour permettre à la conduite source de vapeur d'appoint (130) de fournir la vapeur d'appoint dans la cuve d'eau d'alimentation (110) pour réchauffer l'eau d'alimentation jusqu'à la température minimale requise calculée par le circuit (160) de système de surveillance continue des émissions.

9. Système de préchauffage d'eau d'alimentation selon la revendication 7, **caractérisé en ce qu'**il comprend un système de mesure de point de rosée d'eau/acide dédié qui est configuré jusqu'au générateur de vapeur à récupération de chaleur (200) pour permettre le calcul de la température minimale réglée sur la base de paramètres du générateur de vapeur à récupération de chaleur.

10. Procédé de préchauffage d'eau d'alimentation devant alimenter un générateur de vapeur à récupération de chaleur (200), le procédé comprenant :
la circulation de l'eau d'alimentation dans une conduite d'alimentation (112) et une conduite de retour (114) d'une cuve d'eau d'alimentation (110), la conduite de retour (114) excluant une vanne de régulation et étant configurée jusqu'à la cuve d'eau d'alimentation (110) pour réduire la perte de composants pendant la recirculation d'eau d'alimentation,
**caractérisé par**
la circulation de l'eau d'alimentation à vitesse et volume constants pour réduire la perte de chaleur pendant la recirculation d'eau d'alimentation pour maintenir une température minimale réglée de l'eau d'alimentation, augmentant ainsi l'efficacité du générateur de vapeur à récupération de chaleur (200).

11. Procédé selon la revendication 10, **caractérisé en ce qu'**il comprend la fourniture de vapeur d'appoint pour préchauffer l'eau d'alimentation lorsque la température de l'eau d'alimentation devient inférieure à la température minimale réglée.

12. Procédé selon la revendication 11, **caractérisé en ce qu'**il comprend :
le calcul d'une température réglée requise du générateur de vapeur à récupération de chaleur (200) au niveau d'un dernier étage ; et
la fourniture de la vapeur d'appoint pour préchauffer l'eau d'alimentation dans la cuve d'eau d'alimentation (110) lorsque la température de l'eau d'alimentation devient inférieure à la température minimale requise.

13. Procédé selon la revendication 10, **caractérisé en ce qu'**il comprend :
l'augmentation d'une pression opérationnelle de vapeur dans un évaporateur (210) du générateur de vapeur à récupération de chaleur (200) pour déplacer la chaleur jusqu'à la conduite d'alimentation (112) pour augmenter le gain de chaleur dans l'eau d'alimentation et maintenir la température minimale réglée de l'eau d'alimentation, augmentant ainsi l'efficacité du générateur de vapeur à récupération de chaleur.

14. Procédé selon l'une quelconque des revendications 12 et 13, **caractérisé en ce qu'**il comprend l'application d'un dispositif de mesure configuré jusqu'au générateur de vapeur à récupération de chaleur pour permettre le calcul de la température réglée requise sur la base de paramètres du générateur de vapeur à récupération de chaleur.

15. Procédé selon la revendication précédente, **caractérisé en ce que** le dispositif de mesure est un système de surveillance continue des émissions ou un dispositif de mesure de point de rosée d'eau/acide dédié.
